# DEMANDE DE BREVET EUROPEEN

(11) **EP 0 642 233 A1**
(43) Date de publication de la demande: **08.03.1995**
(21) Numéro de dépôt: 94401987.6
(22) Date de dépôt: 07.09.1994
(51) Int. Cl.: H04B 7/26, H04J 3/16

(54) **Trame supportant différents débits, émetteur et récepteur adaptés à une telle frame**

(30) Priorité: 08.09.1993 FR 9310680
(71) Demandeur: ALCATEL MOBILE COMMUNICATION FRANCE, 75008 Paris (FR)
(72) Inventeur: Dupuy, Pierre, F-75017 Paris (FR); Cruchant, Laurent, F-92500 Rueil Malmaison (FR)
(74) Mandataire: Renaud-Goud, Thierry

(57) **Abrégé**

Trame de transmission comprenant un drapeau de synchronisation et des bits d'information (B1 à B62). Elle est formée d'une première sous-trame au moins dans laquelle figure le drapeau de synchronisation et un champ d'identification (I) qui spécifie le nombre de sous-trames, chacune des autres sous-trames comprenant des bits de blocage ainsi disposés que le drapeau de synchronisation ne peut apparaître dans ces sous-trames si ce n'est en concomitance avec la première sous-trame.

Emetteur et récepteur prévus pour une telle trame.

## Description

Dans un système de communication synchrone entre équipements de traitement de données, une des méthodes les plus couramment utilisées pour envoyer des messages consiste à définir une structure de trame caractérisée par
- un drapeau de synchronisation,
- un codage particulier des informations utiles à transmettre, tel que le drapeau de synchronisation ne puisse jamais être reconnu au milieu du train de données transmises.

Une des façons les plus connues pour mettre en oeuvre ce procédé consiste à choisir un drapeau qui est une suite constante de P zéros suivis d'un '1'. Le codage de l'information consiste alors simplement à insérer un '1' chaque fois qu'une suite de (P-1) '0' a été transmise. Par exemple, si le drapeau est '00001' le message '0010 0000 10' sera transmis sous la forme : '00001 0010 00100 10'. Les chiffres soulignés correspondent au drapeau de synchronisation, et au '1' inséré (les espaces n'ont pas d'autre rôle que de faciliter la lecture).

Cette méthode souffre toutefois d'un défaut : le temps de transmission d'un message dépend de son contenu, ce qui est très gênant lorsqu'on souhaite assurer un délai fixe d'acheminement.

La solution connue à ce problème consiste à insérer un '1' tous les (P-1) bits d'information transmis : on est ainsi sûr qu'on ne rencontrera jamais P zéros successifs et le temps de transmission est toujours le même quel que soit l'information à transmettre. Un exemple bien connu de ce procédé est celui des trames V110 définies par le CCITT (Comité Consultatif International du Téléphone et du Télégraphe). Elle sont constituées d'un drapeau de huit zéros suivi d'un '1', un '1' étant ensuite inséré tous les 7 bits pour former une trame de 80 bits, 17 bits étant utilisés pour la synchronisation et 63 pour les informations.

On peut ainsi représenter une trame par un tableau à P colonnes et L lignes. La première ligne que l'on conviendra d'appeler ligne de verrouillage comporte P zéros et les lignes suivantes que l'on nomme lignes de données comprennent chacune un bit de synchronisation qui vaut '1' suivi de (P-1) bits d'informations.

Lorsqu'on réalise de la transmission de données au moyen de telles trames, il est courant que le canal de transmission utilisé présente un débit supérieur à celui qui est nécessaire pour acheminer les trames produites par un équipement.

Afin d'économiser les canaux de transmission, on procède naturellement à une opération de multiplexage selon laquelle ces canaux sont subdivisés en sous-canaux de sorte que le débit d'un sous-canal permette l'acheminement des données d'un équipement.

A titre d'exemple, un canal à plein débit est constitué de deux sous-canaux à demi-débit, les bits du canal correspondant à la suite alternée des bits de chacun des deux sous-canaux. Ainsi, les bits de rang impair du canal proviennent d'un premier sous-canal et les bits de rang pair de ce canal proviennent d'un second sous-canal.

Cette utilisation d'un canal pour transporter deux sous-canaux est pratiquement réalisable, cependant elle interdit l'utilisation indifférenciée de deux sous-canaux à demi-débit ou d'un canal à plein débit. La raison en est que la réception simultanée de deux sous-canaux peut être interprétée comme la réception d'un seul canal à plein débit.

En effet, si l'on choisit une trame à plein débit de P colonnes et L lignes, une trame a demi-débit de P' colonnes et L' lignes, en choisissant une valeur paire pour P, une solution avantageuse consiste à prendre P' = P/2 et L' = L.

On peut par ailleurs décomposer la trame à plein débit en une première et une seconde sous-trames qui comprennent respectivement les bits de rang impair et ceux de rang pair de cette trame plein débit. Il vient que la première sous-trame est identique à la trame demi-débit et que la seconde sous-trame commence par une ligne de verrouillage de P' '0' et comprend ensuite P'. (L - 1) bits d'information.

Etant donné que la première sous-trame est identique à la trame demi-débit et que la ligne de verrouillage de P' '0' peut figurer aussi bien dans la seconde sous-trame que dans la trame demi-débit, il faut prévoir un moyen de discrimination.

Un moyen simple consiste à disposer un champ d'identification qui prend la place de bits d'informations, ce champ précisant qu'il s'agit là soit d'une sous-trame soit d'une trame demi-débit. A titre d'exemple, on peut remplacer un bit d'en-tête par un '0' dans la sous-trame de sorte que le récepteur détecte une erreur de synchronisation sur la trame plein débit. En effet, le récepteur doit toujours recevoir un '1' au début d'une ligne de données. Mais si ce bit d'en tête est forcé à '0', il faut insérer des '1' de part et d'autre de ce bit à '0' pour assurer la non répétition de P' '0' consécutifs.

On définit alors un motif de synchronisation comme l'ensemble formé par le drapeau de synchronisation et le champ d'identification.

Ce motif de synchronisation peut se retrouver tant dans une trame demi-débit que dans la deuxième sous-trame d'une trame plein-débit, puisque celle-ci comporte une suite de P' (L - 1) bits indéterminés.

On admet par ailleurs que les première et seconde sous-trames d'une trame demi-débit sont respectivement acheminées sur un premier et un second sous-canal.

Il apparaît maintenant qu'il n'est pas possible de savoir si le sous-canal véhicule une trame demi-débit ou la seconde sous-trame d'une trame plein débit en analysant ce seul sous-canal. L'information précisant la nature de ce deuxième sous-canal est en effet disponible uniquement dans le premier sous-canal. Il faut donc attendre le traitement d'identification du premier sous-canal :
- si une première sous-trame est identifiée, le deuxième sous-canal correspond à une seconde sous-trame
- si par contre c'est une trame demi-débit qui est identifiée, la reconnaissance du motif de synchronisation dans le second sous-canal implique la présence d'une trame demi-débit.

Il apparaît ainsi que si le deuxième sous-canal véhicule une trame demi-débit, on diffère le traitement de cette trame jusqu'à l'issue du traitement d'identification. Cela occasionne un retard dans la chaîne de transmission, ce qui n'est pas souhaitable.

De plus, si le traitement du premier sous-canal est bien indépendant, ce n'est pas le cas du traitement du second sous-canal qui est conditionné par le traitement du premier. Il s'ensuit que les modules de traitement de chacun des sous-canaux doivent communiquer ensemble ce qui entraîne une complication au niveau de a réalisation du récepteur.

La présente invention a ainsi pour objet une structure de trames définissant une trame plein débit et une trame demi-débit, un émetteur et un récepteur entre lesquels sont acheminées ces trames qui permettent de traiter une trame demi-débit sans délai.

Selon um premier mode de réalisation, une trame de transmission comprenant un drapeau de synchronisation et des bits d'information est formée d'une première sous-trame au moins dans laquelle figure le drapeau de synchronisation et un champ d'identification qui spécifie le nombre de sous-trames, chacune des autres sous-trames comprenant des bits de blocage ainsi disposés que le drapeau de synchronisation ne peut apparaître dans ces sous-trames si ce n'est en concomitance avec la première sous-trame.

On peut prévoir de plus que lesdits bits de blocage soient ainsi dispos que le drapeau de synchronisation ne puisse apparaître dans aucune autre sous-trame que la première sous-trame.

Selon um deuxième mode de réalisation, une trame de transmission comprenant un drapeau de synchronisation et des bits d'information est formée d'une première sous-trame au moins dans laquelle figure le drapeau de synchronisation, chacune des autres sous-trames comprenant des bits de blocage ainsi disposés que le drapeau de synchronisation ne peut apparaître dans ces sous-trames si ce n'est en concomitance avec la première sous-trame, toutes les sous-trames comprenant chacune un champ d'identification qui spécifie si celle-ci est la dernière sous-trame de la trame.

On peut prévoir de plus que les bits de blocage soient ainsi disposés que le drapeau de synchronisation ne puisse apparaître dans aucune autre sous-trame que la première sous-trame.

Un émetteur conforme au premier mode de réalisation produit de telles trames et comprend des moyens pour spécifier qu'il s'agit d'une trame comprenant plusieurs sous-trames dans le champ d'identification.

S'il produit des trames comprenant uniquement une première sous-trame, il comprend des moyens pour spécifier qu'il s'agit d'une trame comprenant une seule sous-trame dans le champ d'identification.

Un émetteur conforme au deuxième mode de réalisation produit de telles trames et comprend des moyens pour spécifier dans le champ d'identification de la dernière sous-trame qu'il s'agit d'une dernière sous-trame et pour spécifier dans le champ d'identification des autres sous-trame qu'il ne s'agit pas d'une dernière sous-trame.

S'il produit des trames comprenant uniquement une première sous-trame, il comprend des moyens pour spécifier qu'il s'agit d'une dernière sous-trame dans le champ d'identification.

Un récepteur conforme au premier mode de réalisation recevant des sous-trames par des sous-canaux comprend pour chaque sous-canal des moyens de synchronisation pour produire un signal de validation associé à l'apparition du drapeau de synchronisation, pour chaque sous-canal secondaire distinct du premier sous-canal, des moyens d'identification pour établir en réponse au signal de validation associé à ce sous-canal secondaire que celui-ci véhicule une trame complète si le signal de validation associé au premier sous-canal est absent et, pour le premier sous-canal, des moyens de discrimination qui, en réponse au signal de validation associé à ce premier sous-canal recherchent dans ledit champ d'identification le nombre de sous-trame formant la trame dont est issue la sous-trame véhiculée par ce premier sous-canal.

On prévoit également des moyens d'identification pour établir en réponse au signal de validation associé au sous-canal secondaire que celui-ci véhicule une trame complète même si le signal de validation associé au premier sous-canal est présent.

Un récepteur conforme au deuxième mode de réalisation recevant des sous-trames par des sous-canaux comprend pour chaque sous-canal des moyens de synchronisation pour produire un signal de validation associé à l'apparition du drapeau de synchronisation, un organe de définition pour produire un signal d'état indiquant la nature de la sous-trame correspondante en réponse au signal de validation associé à ce sous-canal ou à un signal de commande, et comprend un circuit de commande pour produire un signal de commande à destination d'un organe de définition s'il a reçu un signal d'état précisant que la sous-trame reçue sur le sous-canal précédent celui qui est associé à cet organe de définition n'est pas une dernière sous-trame.

L'invention apparaîtra maintenant de manière plus précise dans le cadre de la description d'exemples de réalisation en référence aux figures qui représentent :
- la figure 1, une première sous-trame,
- la figure 2, une seconde sous-trame,
- la figure 3, un schéma d'un récepteur.

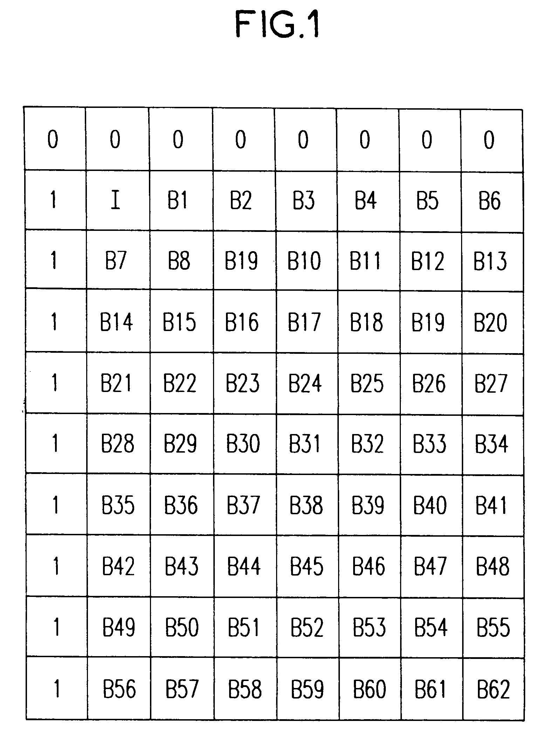

En référence à la figure 1, une trame employée pour le demi-débit que l'on appelle également première sous-trame comprend :
- une ligne de verrouillage formée de huit '0',
- une première ligne de données comprenant un bit d'en-tête à '1', un bit d'identification I positionné à '0' par exemple, et six bits d'information B1 à B6,
- une seconde ligne de données comprenant un bit d'entête à '1' et les sept bits d'information suivants B7 à B13
- une troisième ligne de données comprenant un bit d'en-tête à '1' et les sept bits d'information suivants B14 à B20, et ainsi de suite jusqu'à
- une neuvième ligne de données comprenant un bit d'en-tête à '1' et les sept derniers bits d'informations B56 à B62.

La trame plein débit est formée d'une première sous-trame et d'une seconde sous-trame.

La première sous-trame est identique à celle utilisée pour le demi-débit, si ce n'est que le bit d'identification prend une valeur distincte, '1' dans l'exemple choisi.

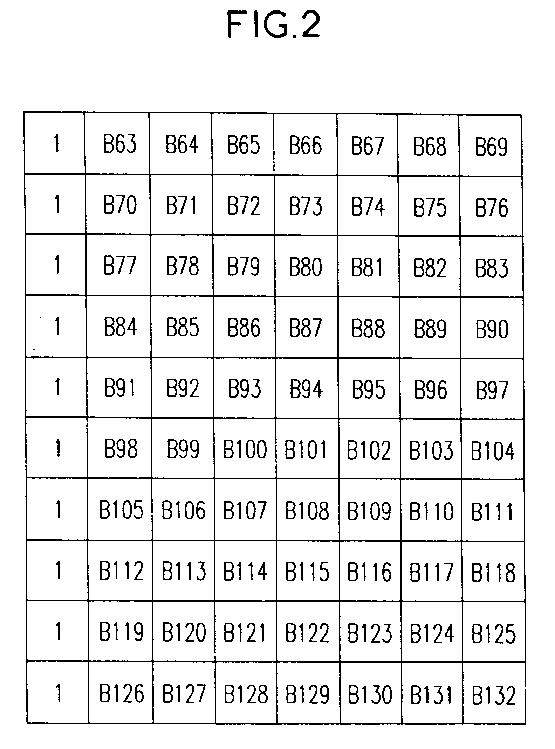

La seconde sous-trame, en référence à la figure 2, comprend 10 lignes de données chacune formée d'un bit de blocage à '1' suivi de sept bits d'information. Ainsi, la première ligne de données comprend les bits d'information B63 à B69, la seconde, les bits d'information B70 à B76, et ainsi de suite jusqu'à la deuxième qui comprend les bits d'information B126 à B132.

Il apparaît clairement que le drapeau de synchronisation de la première sous-trame formé de la ligne de verrouillage et du bit d'en-tête qui suit ne peut pas figurer dans la deuxième sous-trame.

L'invention concerne donc un émetteur qui produit des trames demi-débit au format de la première sous-trame décrite ci-dessus, en positionnant le bit d'identification I à '0'. Les moyens nécessaires ne seront pas décrits car ils font partie de l'état de la technique.

Elle concerne également émetteur qui produit des trames plein-débit au moyen d'une première sous-trame dans laquelle elle positionne le bit d'identification à '1' et d'une seconde sous-trame. Là encore, les moyens nécessaires font partie de l'état de la technique, ils ne seront pas détaillés.

Bien entendu, un même émetteur peut être conçu pour émettre des trames demi-débit ou des trames plein débit.

On considère que le canal de transmission utilisé comprend deux sous-canaux. Si l'émetteur produit une trame plein débit, il place la première sous-trame sur le premier sous-canal, alors que s'il produit une trame demi-débit, celle-ci prendra place sur l'un des deux sous-canaux.

L'invention concerne également un récepteur qui reçoit les trames ainsi produites.

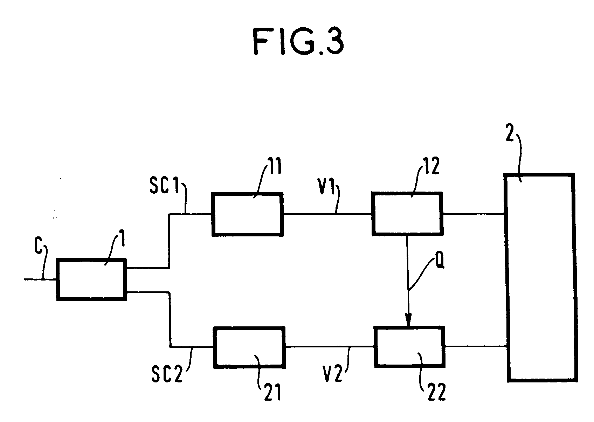

En référence à la figure 3, le récepteur est donc relié au canal de transmission C. Il comprend un démultiplexeur 1 pour récupérer le premier SC1 et le second SC2 sous-canal.

Il comprend des premiers moyens de synchronisation 11 qui reçoivent le premier sous-canal SC1 pour rechercher la synchronisation sur le drapeau de synchronisation et produire un premier signal de validation V1 en cas de succès.

Il comprend de plus des moyens de discrimination 12 qui, en réponse au premier signal de validation V1, identifient la nature de la trame reçue au moyen du bit d'identification I. Ils produisent cette information à destination d'un circuit de commande 2 qui a en charge le traitement du canal de transmission. Ce circuit étant un organe courant dans l'état de la technique, il ne sera pas d'avantage explicité.

Le récepteur comprend également des seconds moyens de synchronisation 21 qui reçoivent le second sous-canal SC2 pour rechercher la synchronisation sur le drapeau de synchronisation, et produire un second signal de validation V2 en cas de succès.

Il comprend de plus des moyens d'identification 22 qui reçoivent le deuxième signal de validation V2. En réponse à ce signal, ils produisent une information à destination du circuit de commande lui précisant que ce deuxième sous-canal véhicule une trame demi-débit.

Il apparaît ainsi que le récepteur peut traiter une trame demi-débit reçue sur le deuxième sous-canal SC2 dès la réception du deuxième signal de validation V2 et ceci indépendamment de toute information issue du premier sous-canal SC1.

On remarquera par ailleurs qu'il n'est pas indispensable que le premier bit de la seconde sous-trame soit un bit de blocage. En effet, si la première ligne de cette sous-trame ne comprend que des '0', cela conduira à la production du second signal de validation V2 en concomitance avec celle du premier signal de validation V1 car les deux sous-trames issues d'une trame plein débit sont émises en synchronisme.

Ainsi, dans une variante du récepteur les moyens de discrimination 12 produisent un signal de qualification Q qui est '0' s'ils ont reconnu une sous-trame émanant d'une trame plein-débit et à '1' s'ils ont reconnu une trame demi-débit.

Les moyens d'identification 22 qui reçoivent ce signal de qualification identifient la sous-trame qu'ils analysent comme une trame demi-débit ou la deuxième sous-trame d'une trame plein-débit selon que ce signal est respectivement à '1' ou à '0'.

On remarquera que, selon cette variante, il faut prévoir un lien de communication entre les moyens de discrimination 12 et les moyens d'identification 22 pour supporter le signal de qualification Q mais que, par contre, on fait l'économie d'un bit de blocage dans la seconde sous-trame.

De plus, il va sans dire que les bits de blocage peuvent être à n'importe quel endroit dans la seconde sous-trame pourvu qu'ils interdisent la reproduction du drapeau de synchronisation. Ainsi il suffit que deux bits de blocage soient séparés par au plus sept bits d'information si la ligne de verrouillage comprend huit '0' et dans le cas général d'une ligne de verrouillage de P '0', il faut au plus (P - 1) bits d'informations entre deux bits de blocage consécutifs.

Par ailleurs, on a choisi de réserver un bit d'identification I pour indiquer la nature de la sous-trame correspondante. Il s'agit naturellement d'un exemple et tout moyen compris dans l'état de la technique peut convenir. On considère donc le cas plus général d'un champ d'identification dans la sous-trame, ce champ prenant deux valeurs distinctes selon qu'il identifie une trame plein-débit ou une trame demi-débit.

Selon l'exemple de réalisation ci-dessus, le canal de transmission comprend uniquement deux sous-canaux, une trame pouvant comporter soit deux sous-trames pour le plein-débit soit une seule sous-trame pour le demi-débit.

L'invention s'applique bien entendu quel que soit le nombre des sous-canaux, chaque sous-canal véhiculant une sous-trame. On pense donc au cas où une trame à plein débit occupe la totalité des sous-canaux tandis qu'une trame à débit réduit utilise seulement un sous-canal. Chaque sous-trame de la trame plein débit à l'exception de la première déjà décrite, est conforme à la seconde sous-trame déjà décrite.

Il suffit dans ce cas de disposer dans le récepteur des moyens de synchronisation additionnels et des moyens d'identification additionnels pour chacun des sous-canaux supplémentaires.

L'invention s'applique encore dans le cas très général où l'on cherche à traiter une trame comprenant p sous-trames dans un canal comportant q sous-canaux.

La trame comprendra une première sous-trame telle que déjà définie et les sous-trames suivantes seront conformes à la deuxième sous-trame décrite en référence à la figure 2, si ce n'est qu'on y dispose également un bit d'identification I.

A titre d'exemple, on prévoit dans ce cas que le bit d'identification I indique non pas le nombre de sous-trames mais si la sous-trame dans laquelle il figure est la dernière sous-trame de la trame ou si elle ne l'est pas.

On ne développera pas les moyens nécessaires dans l'émetteur car ils sont déjà connus.Ces moyens permettent de spécfier dans le bit d'identification d'une sous-trame si celle-ci est une dernière sous-trame ou non.

On remplace dans le récepteur, les moyens de discrimination et les moyens d'identification précédemment décrits par un organe de définition pour chacun des sous-canaux.

Cet organe de définition, en réponse au signal de validation associé au même sous-canal ou en réponse à un signal de commande produit par le circuit de commande 2 recherche le bit d'identification de la sous-trame considérée pour produire à destination de ce circuit 2 un signal d'état précisant si cette sous-trame est ou n'est pas la dernière d'une trame.

On prévoit que les p sous-trames d'une même trame apparaissent selon leur ordre dans la trame dans p sous-canaux consécutifs et dans le même ordre.

Ainsi, à supposer qu'une telle trame soit émise à compter du premier sous-canal, le circuit de commande va recevoir, du premier organe de définition un signal d'état précisant que la sous-trame correspondante a une suite.

Il va alors produire un signal de commande à destination de l'organe de définition du second sous-canal pour acquérir la nature de la sous-trame de sous-canal au moyen du signal d'état correspondant. A supposer que celui-ci soit présent, il recommence la même opération sur le troisième sous-canal et ainsi de suite jusqu'au pième sous-canal. Là il va détecter la dernière sous-trame.

On remarquera que la détection du bit d'identification dans chacune des sous-trames ne pose aucune difficulté pourvu que sa position dans la sous-trame soit connue. En effet les différentes sous-trames d'une même trame sont émises en synchronisme.

Le circuit de commande recompose alors la trame complète à partir des p sous-trames.

Le raisonnement précédent s'applique naturellement quel que soit le sous-canal sur lequel est émis la première sous-trame.

On remarque que dans ce mode de réalisation également, on peut traiter chaque trame reçue indépendamment des autres du fait que le drapeau de synchronisation ne figure que dans la première sous-trame d'une trame donnée.

Ainsi dès que la synchronisation a été obtenue sur un sous-canal, le signal de validation associé est produit pour préciser qu'il s'agit là de la première sous-trame d'une trame, et le traitement de cette trame peut commencer.

## Revendications

**1)** Trame de transmission comprenant un drapeau de synchronisation et des bits d'information (B1 à B62) caractérisée en ce qu'elle est formée d'une première sous-trame au moins dans laquelle figure ledit drapeau de synchronisation et un champ d'identification (I) qui spécifie le nombre de sous-trames, chacune des autres sous-trames comprenant des bits de blocage ainsi disposés que ledit drapeau de synchronisation ne peut apparaître dans ces sous-trames si ce n'est en concomitance avec ladite première sous-trame.

**2)** Trame selon la revendication 1 caractérisée en ce que, lesdits bits de blocage sont ainsi disposés que ledit drapeau de synchronisation ne peut apparaître dans aucune autre sous-trame que ladite première sous-trame.

**3)** Trame de transmission comprenant un drapeau de synchronisation et des bits d'information (B1 à B62) caractérisée en ce qu'elle est formée d'une première sous-trame au moins dans laquelle figure ledit drapeau de synchronisation, chacune des autres sous-trames comprenant des bits de blocage ainsi disposés que ledit drapeau de synchronisation ne peut apparaître dans ces sous-trames si ce n'est en concomitance avec ladite première sous-trame, toutes les sous-trames comprenant chacune un champ d'identification (I) qui spécifie si celle-ci est la dernière sous-trame de ladite trame.

**4)** Trame selon la revendication 3 caractérisée en ce que, lesdits bits de blocage sont ainsi disposés que ledit drapeau de synchronisation ne peut apparaître dans aucune autre sous-trame que ladite première sous-trame.

**5)** Emetteur caractérisé en ce qu'il produit des trames conformes à l'une quelconque des revendications 1 ou 2 et en ce qu'il comprend des moyens pour spécifier qu'il s'agit d'une trame comprenant plusieurs sous-trames dans ledit champ d'identification (I).

**6)** Emetteur caractérisé en ce qu'il produit des trames comprenant uniquement une première sous-trame telle que définie dans la revendication 1 et en ce qu'il comprend des moyens pour spécifier qu'il s'agit d'une trame comprenant une seule sous-trame dans ledit champ d'identification (I).

**7)** Emetteur caractérisé en ce qu'il produit des trames conformes à l'une quelconque des revendications 3 ou 4 et en ce qu'il comprend des moyens pour spécifier dans ledit champ d'identification (I) de la dernière sous-trame qu'il s'agit d'une dernière sous-trame et pour spécifier dans ledit champ d'identification (I) des autres sous-trame qu'il ne s'agit pas d'une dernière sous-trame.

**8)** Emetteur caractérisé en ce qu'il produit des trames comprenant uniquement une première sous-trame telle que définie dans la revendication 3 et en ce qu'il comprend des moyens pour spécifier qu'il s'agit d'une dernière sous-trame dans ledit champ d'identification (I).

**9)** Récepteur caractérisé en ce que, recevant des sous-trames définies dans la revendication 1 par des sous-canaux, il comprend pour chaque sous-canal (SC1, SC2) des moyens de synchronisation (11, 12) pour produire un signal de validation (V1, V2) associé à l'apparition dudit drapeau de synchronisation, pour chaque sous-canal secondaire (SC2) distinct du premier sous-canal (SC1), des moyens d'identification (22) pour établir en réponse au signal de validation (V2) associé audit sous-canal secondaire (SC2) que celui-ci véhicule une trame complète si le signal de validation (V1) associé audit premier sous-canal (SC1) est absent et, pour ledit premier sous-canal (SC1), des moyens de discrimination (12) qui, en réponse au signal de validation (V1) associé à ce premier sous-canal (SC1) recherchent dans ledit champ d'identification le nombre de sous-trame formant la trame dont est issue la sous-trame véhiculée par ce premier sous-canal (SC1).

**10)** Récepteur caractérisé en ce que, recevant des sous-trames définies dans la revendication 2 par des sous-canaux, il comprend pour chaque sous-canal (SC1, SC2) des moyens de synchronisation (11, 12) pour produire un signal de validation (V1, V2) associé à l'apparition dudit drapeau de synchronisation, pour chaque sous-canal secondaire (SC2) distinct du premier sous-canal (SC1), des moyens d'identification (22) pour établir en réponse au signal de validation (V2) associé audit sous-canal secondaire (SC2) que celui-ci véhicule une trame complète, et, pour ledit premier sous-canal (SC1), des moyens de discrimination (12) qui, en réponse au signal de validation (V1) associé à ce premier sous-canal (SC1) recherchent dans ledit champ d'identification le nombre de sous-trame formant la trame dont est issue la sous-trame véhiculée par ce premier sous-canal (SC1).

**11)** Récepteur caractérisé en ce que, recevant des sous-trames définies dans l'une quelconque des revendications 3 ou 4 par des sous-canaux, il comprend pour chaque sous-canal (SC1, SC2) des moyens de synchronisation (11, 12) pour produire un signal de validation (V1, V2) associé à l'apparition dudit drapeau de synchronisation, un organe de définition pour produire un signal d'état indiquant la nature de la sous-trame correspondante en réponse au signal de validation (V2) associé audit sous-canal (SC2) ou à un signal de commande,et en ce qu'il comprend un circuit de commande pour produire un signal de commande à destination d'un organe de définition s'il a reçu un signal d'état précisant que la sous-trame reçue sur le sous-canal précédent celui qui est associé audit organe de définition n'est pas une dernière sous-trame.
